# EUROPEAN PATENT SPECIFICATION

(11) **EP 4 495 506 B1**
(45) Date of publication and mention of the grant of the patent: **28.10.2026**
(21) Application number: 24188785.0
(22) Date of filing: 16.07.2024
(51) Int. Cl.: F25B 13/00, F25B 49/02

(54) **REFRIGERATION CYCLE APPARATUS**
KÄLTEKREISLAUFVORRICHTUNG
APPAREIL À CYCLE DE RÉFRIGÉRATION

(30) Priority: 18.07.2023 JP 2023116670
(43) Date of publication of application: 22.01.2025
(73) Proprietor: Panasonic Intellectual Property Management Co., Ltd., Kadoma-shi, Osaka 571-0057 (JP)
(72) Inventor: IMAGAWA, Tsuneko, Kadoma-shi, Osaka, 571-0057 (JP); YAMAOKA, Yuki, Kadoma-shi, Osaka, 571-0057 (JP); BANDO, Yasuaki, Kadoma-shi, Osaka, 571-0057 (JP)
(74) Representative: Eisenführ Speiser

(56) References cited:
- EP-A1- 3 805 663
- US-B2- 10 018 393
- US-B2- 10 077 925

## Description

### BACKGROUND OF THE INVENTION

### Field of the Invention

The present invention relates to a refrigeration cycle apparatus.

### Description of the Related Art

European Patent Application Publication No. 3730875 discloses a configuration in an air conditioning apparatus that performs air conditioning inside a room through a refrigeration cycle having a two-stage compressor, in which, when the outside air temperature becomes equal to or lower than a predetermined temperature, a target discharge superheat degree is calculated based on the frequency and high/low pressure ratio of the compressor, and an expansion valve provided in an injection pipe branching off from a main pipe connecting an indoor heat exchanger to an outdoor heat exchanger controls the flow rate of a refrigerant flowing into an injection port of the two-stage compressor through the injection pipe so as to achieve the target discharge superheat degree. In the above configuration, when the high/low pressure ratio of the two-stage compressor is small, the expansion valve is controlled so that the target discharge superheat degree is reduced, thereby improving efficiency.

From US patent 10,018,393, a method for controlling an economizer circuit is known. The economizer circuit includes a valve to regulate refrigerant flow between the economizer and the compressor. The valve can be opened to engage the economizer circuit or closed to disengage the economizer circuit based on the output frequency provided to the compressor motor by a variable speed drive and an operating condition of the economizer.

Document EP 3 805 663 A1 discloses a refrigeration cycle apparatus according to the preamble of claim 1. EP patent application 3 805 663 describes a supercritical vapor compression type refrigeration cycle and a liquid heating device using the supercritical vapor compression type refrigeration cycle. The refrigeration cycle includes: a main refrigerant circuit formed by sequentially connecting, through a pipe, a compression mechanism, a usage-side heat exchanger, an intermediate heat exchanger, a first expansion device and a heat source-side heat exchanger; a bypass refrigerant circuit branched off from the pipe between the usage-side heat exchanger and the first expansion device, in which branched refrigerant is decompressed by a second expansion device. Thereafter, heat of the refrigerant is exchanged with that of refrigerant flowing through the main refrigerant circuit by the intermediate heat exchanger, and the refrigerant joins up with refrigerant which is in the middle of a compression operation of the compression rotation element. Further, a control device is provided, wherein the control device controls a valve opening of the second expansion device such that pressure of the refrigerant after it is decompressed by the second expansion device keeps exceeding critical pressure, and also when high pressure is increased, COP of the supercritical vapor compression type refrigeration cycle is not deteriorated.

The present invention provides a refrigeration cycle apparatus that can control fluctuations in the heating capacity of a use side heat exchanger when the injection flow rate of a refrigerant into an injection port of a compressor is changed.

### SUMMARY OF THE INVENTION

According to the present invention the above objective is solved by the features of claim 1. Preferred embodiments are defined in the dependent claims. A refrigeration cycle apparatus in the present invention includes a main refrigerant circuit through which a refrigerant circulates, the main refrigerant circuit including a compressor having an injection port communicating with a compression chamber, a use side heat exchanger, a first expansion valve, and a heat source side heat exchanger connected in order, a bypass refrigerant circuit branching off from the main refrigerant circuit between the use side heat exchanger and the first expansion valve, the bypass refrigerant circuit communicating with the injection port of the compressor, the bypass refrigerant circuit including a second expansion valve and an intermediate heat exchanger connected in order from the main refrigerant circuit side, and a controller configured to control an operating frequency of the compressor and an open-close of the second expansion valve. The controller includes a processor and a memory, and control data for determining control conditions for the compressor are stored in the memory. The controller executes control to bring the second expansion valve into an open state to perform injection when an outside air temperature detected by an outside air temperature sensor is equal to or lower than a predetermined temperature and to bring the second expansion valve into a closed state to not perform injection when the outside air temperature is higher than the predetermined temperature; and controls the operating frequency of the compressor so as to offset an increase or reduction in a heating capacity of the use side heat exchanger resulting from switching the second expansion valve between the open state and the closed state and so that a temperature of a heating medium flowing out of the use side heat exchanger into a use side heating medium circuit becomes a set temperature, using a control map included in the control data.

The operating frequency of the compressor corresponds to the rotation speed of a rotor in a compressor that pressure-feeds a refrigerant by using the rotational motion of the rotor and corresponds to the reciprocating speed of a piston in a compressor that pressure-feeds a refrigerant by using the reciprocating motion of the piston.

### Advantageous Effect of Invention

The refrigeration cycle apparatus of the present invention includes the configuration that performs injection of the refrigerant into the compressor through the bypass refrigerant circuit, and changes the operating frequency of the compressor in accordance with the opening degree of the second expansion valve provided in the bypass refrigerant circuit. Thus, it is possible to control fluctuations in the heating capacity of the use side heat exchanger, the heating capacity varying in accordance with the injection flow rate of the refrigerant.

### BRIEF DESCRIPTION OF THE DRAWINGS

FIG. 1 is a configuration diagram of a refrigeration cycle apparatus in an embodiment;
FIG. 2 is a control block diagram of the refrigeration cycle apparatus in the embodiment;
FIG. 3 is a pressure-enthalpy chart (P-h chart) in the refrigeration cycle apparatus in the embodiment;
FIG. 4 is a correspondence graph between a heating capacity improvement rate and an outside air temperature in the refrigeration cycle apparatus in the embodiment;
FIG. 5 is a correspondence graph between a change ratio of an operating frequency of a compressor and the outside air temperature in the refrigeration cycle apparatus in the embodiment;
FIG. 6 is a timing chart of control of start and injection of the refrigeration cycle apparatus in the embodiment;
FIG. 7 is a timing chart of a modified version of the control of start and injection of the refrigeration cycle apparatus in the embodiment;
FIG. 8 is a first flow chart of a process for controlling the compressor, a first expansion valve, and a second expansion valve of the refrigeration cycle apparatus in the embodiment; and
FIG. 9 is a second flow chart of the process for controlling the compressor, the first expansion valve, and the second expansion valve of the refrigeration cycle apparatus in the embodiment.

### DETAILED DESCRIPTION OF THE PREFERRED EMBODIMENTS

### (Knowledge and the like Underlying Present Disclosure)

At the time when the inventors conceived of the present invention, there was a technique in a refrigeration cycle apparatus in which part of the refrigerant that has been discharged from a compressor and has exchanged heat in a use side heat exchanger is injected into the compressor through a bypass circuit under a predetermined condition such as a low outside air temperature. This technique can improve the heating capacity of the use side heat exchanger.

However, when the injection of the refrigerant into the compressor is switched from absent to present, a load on the compressor disadvantageously increases due to the occurrence of overshoot of the discharge temperature of the refrigerant from the compressor. In addition, when the injection of the refrigerant into the compressor is switched from present to absent, the temperature of a heating medium fed from the use side heat exchanger disadvantageously drops due to a significant reduction in the heating capacity of the use side heat exchanger. The inventors have found a problem of how to avoid the occurrence of these disadvantages, and have come to constitute the subject matter of the present invention to solve the problem.

Thus, the present invention provides a refrigeration cycle apparatus that can control fluctuations in the heating capacity of a use side heat exchanger when the injection flow rate of a refrigerant into an injection port of a compressor is changed.

Hereinbelow, embodiments will be described in detail with reference to the drawings. Note that more details than necessary may be omitted. For example, detailed description of already well-known matters or repetitive description for substantially identical configurations may be omitted. This is to avoid making the following description unnecessarily redundant and facilitate the understanding of those skilled in the art.

Note that the accompanying drawings and the following description are provided to enable those skilled in the art to fully understand the present invention and are not intended to limit the subject matter described in the claims.

### (Embodiment)

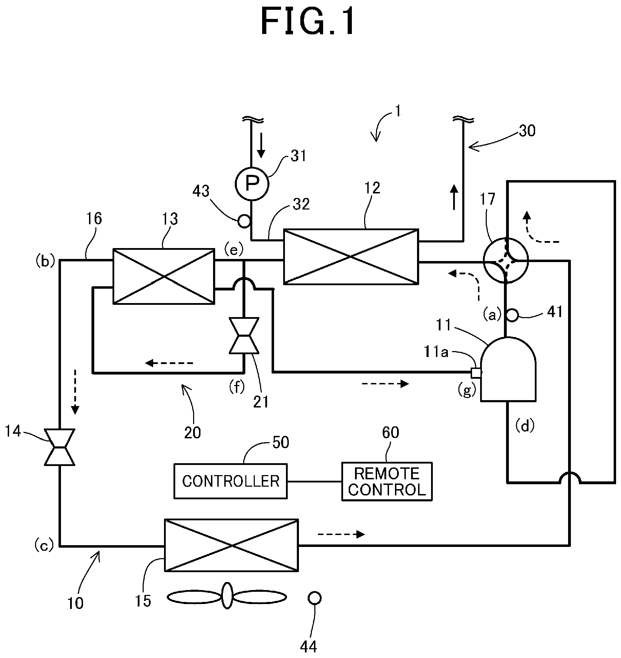

Hereinbelow, an embodiment will be described with reference to FIGS. 1 to 7.

### [1. Configuration]

FIG. 1 is a configuration diagram of a refrigeration cycle apparatus 1 according to the present embodiment. The refrigeration cycle apparatus 1 is a vapor compression refrigeration cycle apparatus, and includes a main refrigerant circuit 10 and a bypass refrigerant circuit 20, and a controller 50.

The main refrigerant circuit 10 includes a compressor 11 that compresses a refrigerant, a use side heat exchanger 12 that functions as a radiator, an intermediate heat exchanger 13 that functions as an economizer, a first expansion valve 14, and a heat source side heat exchanger 15 that functions as an evaporator connected in order through a refrigerant pipe 16. The first expansion valve 14 is an opening adjustable valve whose opening degree is changeable by, for example, a stepping motor. In the present embodiment, the refrigerant pipe 16 is provided with a four-way valve 17 between the compressor 11 and the use side heat exchanger 12. The four-way valve 17 switches the direction in which the refrigerant discharged from the compressor 11 flows.

That is, the four-way valve 17 performs switching between a first direction state in which the refrigerant discharged from the compressor 11 flows in a direction indicated by chain-line arrows in FIG. 1 through the compressor 11, the four-way valve 17, the use side heat exchanger 12, the intermediate heat exchanger 13, the first expansion valve 14, the heat source side heat exchanger 15, the four-way valve 17, and the compressor 11 in this order and a second direction state in which the refrigerant flows in a direction opposite to the direction in the first direction state through the compressor 11, the four-way valve 17, the heat source side heat exchanger 15, the first expansion valve 14, the intermediate heat exchanger 13, the use side heat exchanger 12, the four-way valve 17, and the compressor 11 in this order. In the second direction state, the heat source side heat exchanger 15 functions as a radiator, and the use side heat exchanger 12 functions as an evaporator. In the present embodiment, a case in which the refrigeration cycle apparatus 1 is operated in the first direction state in which the use side heat exchanger 12 functions as a radiator will be described.

The bypass refrigerant circuit 20 branches off from the refrigerant pipe 16 between the use side heat exchanger 12 and the first expansion valve 14 and communicates with an injection port 11a provided in a compression chamber of the compressor 11. The bypass refrigerant circuit 20 includes the second expansion valve 21 and the intermediate heat exchanger 13 connected in order from the upstream side. The second expansion valve 21 is an on-off valve switchable between an open state and a closed state. An opening degree of the second expansion valve 21 in a closed state corresponds to the first opening degree of the present invention, and an opening degree of the second expansion valve 21 in an open state corresponds to the second opening degree of the present invention.

Part of the high-pressure refrigerant passing through the use side heat exchanger 12 flows into the bypass refrigerant circuit 20 and is decompressed by the second expansion valve 21 to become an intermediate-pressure refrigerant. The intermediate-pressure refrigerant exchanges heat with the high-pressure refrigerant flowing through the main refrigerant circuit 10 in the intermediate heat exchanger 13 and is then injected into the compressor 11. The refrigerant injected into the compressor 11 merges with the refrigerant in the process of being compressed in the compression chamber of the compressor 11. The compressor 11 merges the injected refrigerant with the refrigerant in the process of being compressed and performs recompression.

A use side heating medium circuit 30 includes the use side heat exchanger 12, a feed pump 31, and a heating terminal or a hot water storage tank (not shown) that are connected through a heating medium pipe 32. Water or an antifreeze solution can be used as a heating medium passed through the use side heating medium circuit 30. The use side heat exchanger 12 performs heat exchange between the heating medium flowing through the heating medium pipe 32 and the refrigerant discharged from the compressor 11 to the main refrigerant circuit 10 to heat the heating medium flowing through the heating medium pipe 32.

In a case in which the heating medium pipe 32 is connected to the heating terminal, the heating medium heated in the use side heat exchanger 12 is used for heating by heat dissipation from the heating terminal, and the heating medium that has become a low temperature due to heat dissipation from the heating terminal is heated again in the use side heat exchanger 12. In a case in which the heating medium pipe 32 is connected to an upper part and a lower part of the hot water storage tank, and the heating medium is water stored in the hot water storage tank, water heated in the use side heat exchanger 12 is fed from the upper part of the hot water storage tank into the hot water storage tank through the heating medium pipe 32, and low-temperature water is fed from the lower part of the hot water storage tank into the heating medium pipe 32 and heated in the use side heat exchanger 12.

The refrigerant pipe 16 is provided with, on the discharge side of the compressor 11, a discharge pressure sensor 41 that detects the pressure of the refrigerant discharged from the compressor 11. The heating medium pipe 32 is provided with, on the inlet side of the use side heat exchanger 12, a pre-heating temperature sensor 43 that detects the temperature of the heating medium near an inlet of the use side heat exchanger 12. An outside air temperature sensor 44 that detects the outside air temperature is provided near the heat source side heat exchanger 15.

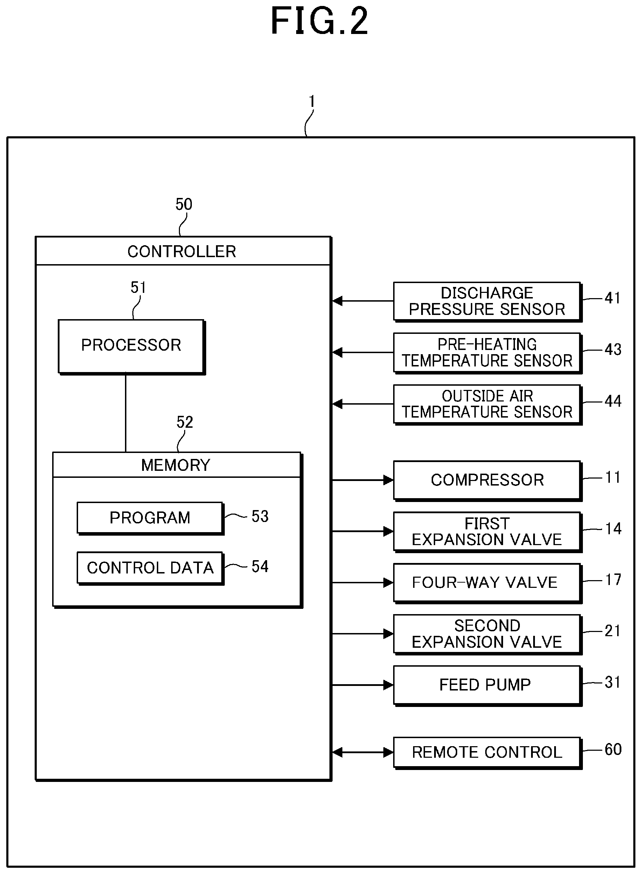

The refrigeration cycle apparatus 1 includes the controller 50 that controls the operations of the compressor 11, the first expansion valve 14, the second expansion valve 21, the four-way valve 17, the feed pump 31, and the like, and a remote control 60 for performing operations such as start and stop of the operation of the refrigeration cycle apparatus 1. FIG. 2 is a control block diagram of the refrigeration cycle apparatus 1. Referring to FIG. 2, the controller 50 is connected to the discharge pressure sensor 41, the pre-heating temperature sensor 43, and the outside air temperature sensor 44, and detection signals of these sensors are input to the controller 50.

The controller 50 is also connected to the compressor 11, the first expansion valve 14, the four-way valve 17, the second expansion valve 21, and the feed pump 31, and the operations of actuators thereof are controlled by control signals output from the controller 50. Furthermore, the controller 50 is connected to the remote control 60. The remote control 60 includes a switch and a display unit, an operation signal of the switch is input to the controller 50, and the operating state of the refrigeration cycle apparatus 1 is displayed on the display unit of the remote control 60 in accordance with a display signal output from the controller 50.

The controller 50 includes a processor 51 and a memory 52, and a program 53 for controlling the refrigeration cycle apparatus 1 and control data 54 for determining control conditions for the compressor 11 and the first expansion valve 14 are stored in the memory 52. The processor 51 reads and executes the program 53, thereby controlling the operation of the refrigeration cycle apparatus 1.

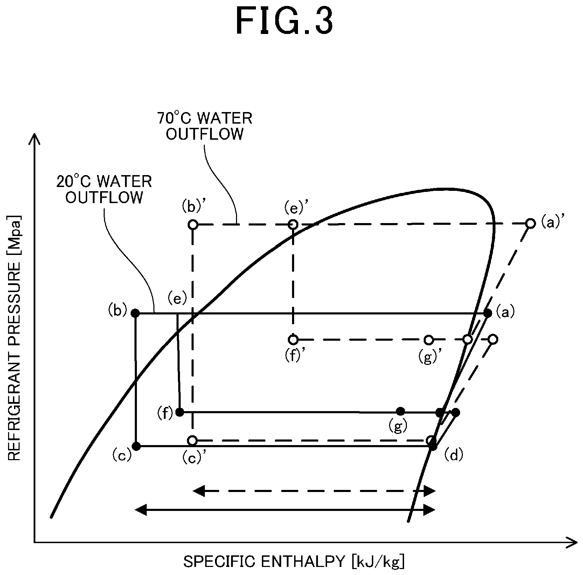

The operation of the refrigeration cycle apparatus 1 will be described with reference to FIGS. 1 and 3. FIG. 3 is a pressure-enthalpy chart (P-h chart) in the case of performing injection of the refrigerant into the compressor 11 in the refrigeration cycle apparatus 1. Points (a) to (g) and (a)' to (g)' in FIG. 3 correspond to positions (a) to (g) in FIG. 1, respectively. In addition, (a) to (g) of FIG. 3 show a case in which a water outflow temperature from the use side heat exchanger 12 (the temperature of water serving as the heating medium flowing out of the use side heat exchanger 12 into the use side pipe 32) is 20°C, and (a)' to (g)' show a case in which the water outflow temperature from the use side heat exchanger 12 is 70°C.

First, the high-pressure refrigerant (a) discharged from the compressor 11 dissipates heat in the use side heat exchanger 12, branches off from the main refrigerant circuit 10 into the bypass refrigerant circuit 20 at (e), is decompressed by the second expansion valve 21 to an intermediate pressure and thus becomes the intermediate-pressure refrigerant (f), and the intermediate-pressure refrigerant exchanges heat with the refrigerant flowing through the main refrigerant circuit 10 in the intermediate heat exchanger 13. The high-pressure refrigerant flowing through the main refrigerant circuit 10 after dissipating heat in the use side heat exchanger 12 is cooled by the intermediate-pressure refrigerant (f) flowing through the bypass refrigerant circuit 20 and reduced in enthalpy (b), and, in this state, brought into a state (c) decompressed by the first expansion valve 14.

The degree of dryness of the refrigerant (c) decompressed by the first expansion valve 14 (the weight ratio of the vapor phase component to the entire refrigerant) at the point in time when the refrigerant flows into the heat source side heat exchanger 15 decreases and the liquid component of the refrigerant increases, and the refrigerant evaporates in the heat source side heat exchanger 15 and returns to the intake side (d) of the compressor 11. On the other hand, the intermediate-pressure refrigerant (f) decompressed to the intermediate pressure by the second expansion valve 21 is heated in the intermediate heat exchanger 13 by the high-pressure refrigerant flowing through the main refrigerant circuit 10 and increased in enthalpy, and, in this state, merges with the refrigerant in the process of being compressed in the compressor 11 (g) through the injection port 11a of the compressor 11. The same applies to (a)' to (g)'.

As shown in FIG. 3, as the water outflow temperature from the use side heat exchanger 12 rises (from 20°C water outflow to 70°C water outflow), the pressure of the refrigerant rises due to the necessity of increasing the temperature of the refrigerant discharged from the compressor 11. When injection is performed, by performing an operation that increases the injection amount as the water outflow temperature from the use side heat exchanger 12 rises, the circulation amount of the refrigerant increases, which increases the heating capacity of the use side heat exchanger 12.

Thus, the operating frequency of the compressor 11 can be reduced. This is because of the following reason. As shown in FIG. 3, as the pressure of the high-pressure refrigerant discharged from the compressor 11 increases, the pressure of the intermediate-pressure refrigerant flowing into the bypass refrigerant circuit 20 also increases, which increases the density of the intermediate-pressure refrigerant. This increases the flow rate of the refrigerant injected into the compressor 11, thereby making it possible to increase the circulation flow rate of the refrigerant in the main refrigerant circuit 10.

As the pressure of the high-pressure refrigerant discharged from the compressor 11 increases, the temperature difference between the high-pressure refrigerant and the intermediate-pressure refrigerant that exchange heat in the intermediate heat exchanger 13 increases. Thus, the temperature difference between an inlet (e') and an outlet (b') for the high-pressure refrigerant in the intermediate heat exchanger 13 increases, and the degree of decrease in the outlet temperature in the intermediate heat exchanger 13 can be increased. Therefore, the degree of decrease in the enthalpy difference can be reduced.

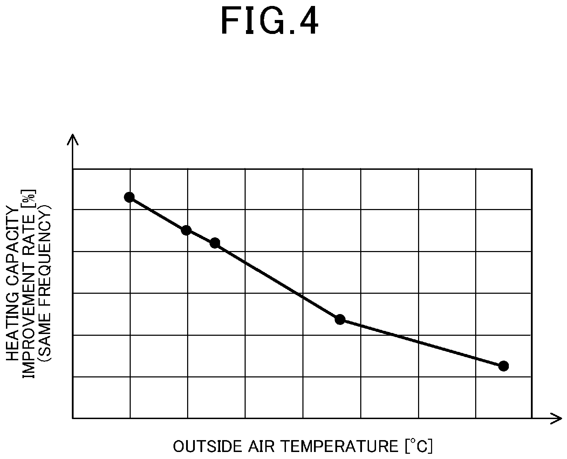

FIG. 4 is a graph showing the effect of improvement of the heating capacity (the heating capacity of the use side heat exchanger 12) obtained by performing injection. In FIG. 4, the vertical axis is set to the rate of improvement in the heating capacity with injection (with the second expansion valve 21 open) relative to without injection (with the second expansion valve 21 closed) under the condition of the same operating frequency of the compressor 11, and the horizontal axis is set to the outside air temperature. FIG. 4 shows that the rate of improvement in the heating capacity resulting from injection increases as the outside air temperature decreases.

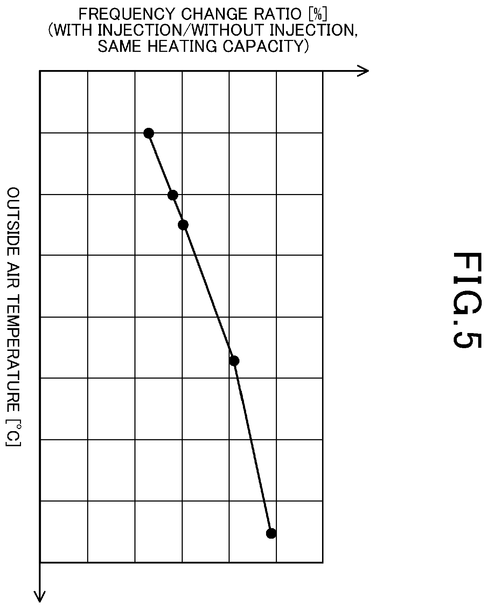

FIG. 5 is a graph showing the ratio of change in the operating frequency of the compressor 11 with and without injection required to obtain the same heating capacity. In the graph of FIG. 5, the vertical axis is set to the ratio of the operating frequency with injection (with the second expansion valve 21 open) to the operating frequency without injection (with the second expansion valve 21 closed), and the horizontal axis is set to the outside air temperature. FIG. 5 shows that the effect of reducing the operating frequency of the compressor 11 obtained by performing injection increases as the outside air temperature decreases.

As shown in FIGS. 4 and 5, when the refrigeration cycle apparatus 1 performs heating, the effect of improving the heating capacity obtained by performing injection increases as the outside air temperature decreases. Thus, the controller 50 executes control to bring the second expansion valve 21 into an open state to perform injection when the outside air temperature detected by the outside air temperature sensor 44 is equal to or lower than a predetermined temperature and to bring the second expansion valve 21 into a closed state to not perform injection when the outside air temperature is higher than the predetermined temperature.

As shown in FIG. 4, under the same operating frequency of the compressor 11, the heating capacity largely differs between a state with injection and a state without injection. Thus, when switching from without-injection to with-injection or switching from with-injection to without-injection is performed without changing the operating frequency of the compressor 11, the heating capacity of the use side heat exchanger 12 largely fluctuates. Therefore, when switching from without-injection to with-injection and switching from with-injection to without-injection are performed, the controller 50 executes control (compressor operation control) to change the operating frequency of the compressor 11 to control fluctuations in the heating capacity of the use side heat exchanger 12.

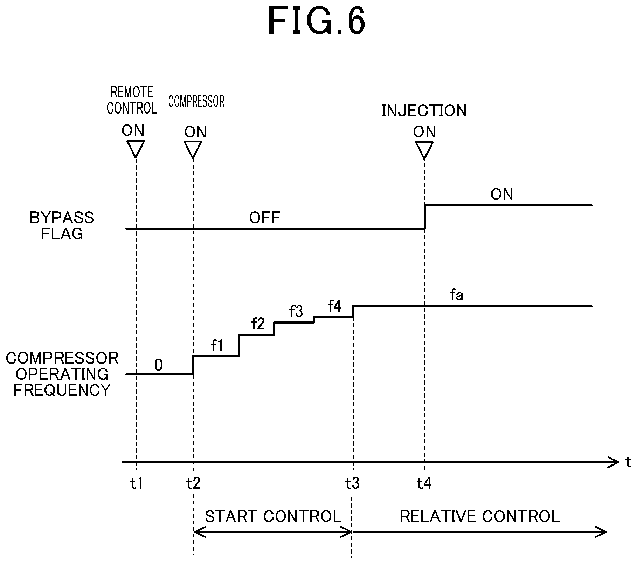

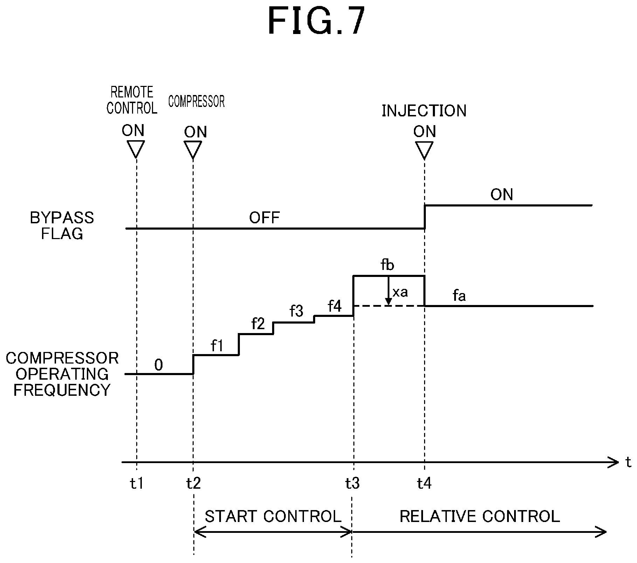

FIGS. 6 and 7 are timing charts of start control and relative control on the refrigeration cycle apparatus 1 performed by the controller 50, showing the progressions of a bypass flag and the operating frequency of the compressor 11 with respect to a time axis t. The relative control applies the discharge pressure of the refrigerant from the compressor 11 detected by the discharge pressure sensor 41, the temperature of the water (heating medium) flowing into the use side heat exchanger 12 detected by the pre-heating temperature sensor 43, and the outside air temperature detected by the outside air temperature sensor 44 to the control conditions determined by the control data 54, and sets the presence or absence of injection, the operating frequency of the compressor 11, the opening degree of the first expansion valve 14, and the rotation speed of the feed pump 31.

The bypass flag corresponds to the presence or absence of injection. When the bypass flag is ON, the second expansion valve 21 is controlled to an open state to perform injection. When the bypass flag is OFF, the second expansion valve 21 is controlled to a closed state to not perform injection. The control at start of the refrigeration cycle apparatus 1 shown in FIGS. 6 and 7 is an example of control of timing at which the bypass flag is switched from OFF to ON (switched from without-injection to with-injection).

In FIG. 6, the controller 50 starts operation of the refrigeration cycle apparatus 1 when the remote control 60 performs an operation start operation (remote control: ON) at t1, and starts operation of the compressor 11 (compressor: ON) at t2 with the bypass flag OFF (without injection). The controller 50 increases the operating frequency of the compressor 11 in stages in the order of f1, f2, f3, f4, and fa from t2 to t3. Then, the controller 50 turns ON the bypass flag to perform switching to with-injection (injection: ON) at t4. In this case, when the switching from without-injection to with-injection is performed at t4, the heating capacity of the use side heat exchanger 12 increases as described above. Thus, overshoot of the discharge temperature of the refrigerant from the compressor 11 may occur. In addition, the temperature of hot water flowing out of the use side heat exchanger 12 rises, and the amount of heat dissipated from the heating terminal increases, or hot water having an unnecessarily high temperature is circulated to the hot water storage tank, which reduces the thermal efficiency of the use side heat exchanger 12.

Thus, as shown in FIG. 7, the controller 50 executes control to set the operating frequency of the compressor 11 in a state without injection from t3 to t4 to fb and to reduce the operating frequency of the compressor 11 to fa when performing switching from without-injection to with-injection at t4. A reduction range xa of the operating frequency is set so as to offset the fluctuation in the heating capacity of the use side heat exchanger 12 resulting from the presence or absence of injection shown in FIGS. 4 and 5.

In this manner, the temperature rise in the heating medium flowing out of the use side heat exchanger 12 into the heating medium pipe 32 can be controlled by performing control to reduce the operating frequency of the compressor 11 so as to offset the fluctuation in the heating capacity of the use side heat exchanger 12 when switching from without-injection to with-injection is performed. In addition, it is possible to prevent a reduction in the reliability of the compressor 11 caused by a rise in the temperature of the refrigerant discharged from the compressor 11.

In addition, the controller 50 performs control to increase the operating frequency of the compressor 11 when performing switching from with-injection to without-injection. In this case, the controller 50 sets the increasing range of the operating frequency so as to offset the reduction in the heating capacity of the use side heat exchanger 12 resulting from the presence or absence of injection.

### [2. Control Process]

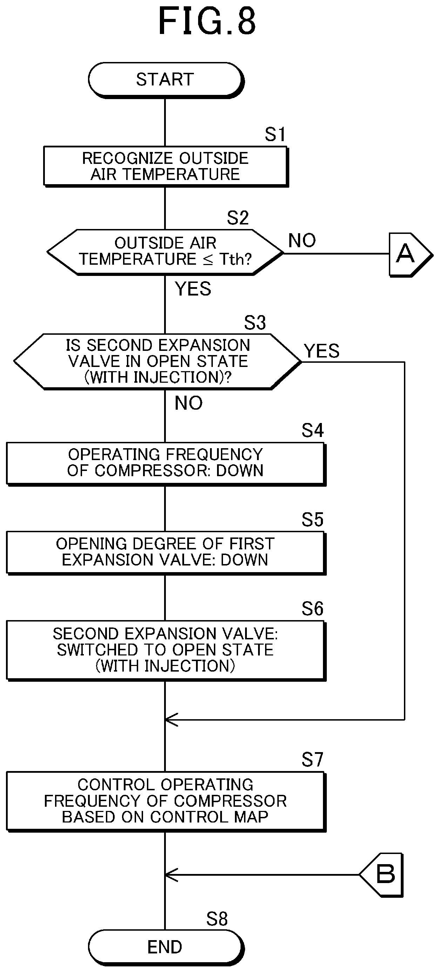

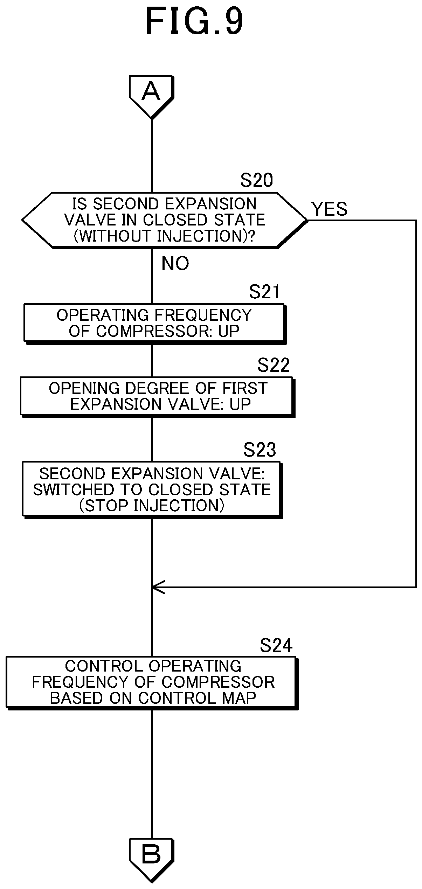

A process for controlling the compressor 11, the first expansion valve 14, and the second expansion valve 21 executed by the controller 50 will be described in accordance with the flow charts shown in FIGS. 8 and 9. The controller 50 repeatedly executes the process of the flow charts shown in FIGS. 8 and 9 during operation of the refrigeration cycle apparatus 1.

In step S1 of FIG. 8, the controller 50 recognizes the outside air temperature based on a detection signal of the outside air temperature sensor 44. In the subsequent step S2, the controller 50 determines whether the outside air temperature is equal to or lower than a predetermined temperature Tth, and advances the process to step S3 when the outside air temperature is equal to or lower than Tth and advances the process to step S20 of FIG. 9 when the outside air temperature is higher than Tth.

In step S3, the controller 50 determines whether the second expansion valve 21 is already in an open state (with injection). Then, the controller 50 advances the process to step S7 when the second expansion valve 21 is in an open state and advances the process to step S4 when the second expansion valve 21 is in a closed state.

In step S4, as described above, the controller 50 reduces the operating frequency of the compressor 11 so as to offset the increase in the heating capacity of the use side heat exchanger 12 resulting from switching from without-injection to with-injection. In the next step S5, the controller 50 reduces the opening degree of the first expansion valve 14 to reduce the flow rate of the refrigerant flowing through the main refrigerant circuit 10. By reducing the flow rate of the refrigerant flowing through the main refrigerant circuit 10, it is possible to reduce the increase in the heating capacity of the use side heat exchanger 12 resulting from switching from without-injection to with-injection.

In the subsequent step S6, the controller 50 switches the second expansion valve 21 to an open state to perform injection. In the next step S7, the controller 50 controls the operating frequency of the compressor 11 so that the temperature of the heating medium flowing out of the use side heat exchanger 12 into the use side heating medium circuit 30 becomes a set temperature, using a control map included in the control data 54.

In step S20 of FIG. 9, the controller 50 determines whether the second expansion valve 21 is already in a closed state (without injection). Then, the controller 50 advances the process to step S24 when the second expansion valve 21 is in a closed state and advances the process to step S21 when the second expansion valve 21 is in an open state.

In step S21, as described above, the controller 50 increases the operating frequency of the compressor 11 so as to offset the reduction in the heating capacity of the use side heat exchanger 12 resulting from switching from with-injection to without-injection. In the next step S22, the controller 50 increases the opening degree of the first expansion valve 14 to increase the flow rate of the refrigerant flowing through the main refrigerant circuit 10. By increasing the flow rate of the refrigerant flowing through the main refrigerant circuit 10, it is possible to reduce the reduction in the heating capacity of the use side heat exchanger 12 resulting from switching from with-injection to without-injection.

In the subsequent step S23, the controller 50 switches the second expansion valve 21 to a closed state to not perform injection. In the next step S24, the controller 50 controls the operating frequency of the compressor 11 so that the temperature of the heating medium flowing out of the use side heat exchanger 12 into the use side heating medium circuit 30 becomes the set temperature, using the control map included in the control data 54.

### [3. Effects and the like]

As described above, in the present embodiment, the refrigeration cycle apparatus 1 includes the main refrigerant circuit 10 through which the refrigerant circulates, the main refrigerant circuit 10 including the compressor 11 having the injection port 11a communicating with the compression chamber, the use side heat exchanger 12, the first expansion valve 14, and the heat source side heat exchanger 15 connected in order, the bypass refrigerant circuit 20 that branches off from the main refrigerant circuit 10 between the use side heat exchanger 12 and the first expansion valve 14, communicates with the injection port 11a of the compressor 11, and includes the second expansion valve 21 and the use side heat exchanger 12 connected in order from the main refrigerant circuit 10 side, and the controller 50 that controls the operating frequency of the compressor 11 and the opening degree of the second expansion valve 21. The controller 50 changes the operating frequency of the compressor 11 in accordance with the opening degree of the second expansion valve 21.

In the refrigerant cycle apparatus 1, the injection amount of the refrigerant into the compressor 11 changes in accordance with the opening degree of the second expansion valve 21, which causes the heating capacity of the use side heat exchanger to fluctuate. Thus, it is possible to control fluctuations in the temperature of the heating medium flowing out of the use side heat exchanger 12 into the heating medium pipe 32 by the controller 50 changing the operating frequency of the compressor 11 in accordance with the opening degree of the second expansion valve 21.

### (Other Embodiments)

As above, the embodiment has been described as an example of the technique disclosed in the present application. However, the technique in the present invention is not limited thereto and also applicable to embodiments with changes, replacements, additions, omissions, and the like.

Although, in the above embodiment, the on-off valve switchable between an open state and a closed state is described as the second expansion valve 21, the second expansion valve 21 may be an opening adjustable valve whose opening degree is changeable. In this case, the injection flow rate of the refrigerant into the compressor 11 is adjusted by the opening degree of the second expansion valve 21, which changes the heating capacity of the use side heat exchanger 12. Thus, it is possible to control fluctuations in the temperature of the heating medium flowing out of the use side heat exchanger 12 into the heating medium pipe 32 by the controller 50 changing the operating frequency of the compressor 11 in accordance with the opening degree of the second expansion valve 21.

Specifically, the controller 50 performs control to reduce the operating frequency of the compressor 11 when changing the opening degree of the second expansion valve 21 from a first opening degree to a second opening degree larger than the first opening degree. In addition, the controller 50 performs control to increase the operating frequency of the compressor 11 when changing the opening degree of the second expansion valve 21 from a third opening degree to a fourth opening degree smaller than the third opening degree.

Although, in the above embodiment, the controller 50 performs control to reduce the opening degree of the first expansion valve 14 when performing switching from without-injection to with-injection in step S5 of FIG. 8, this control may be omitted.

Although, in the above embodiment, the controller 50 performs control to increase the opening degree of the first expansion valve 14 when performing switching from with-injection to without-injection in step S22 of FIG. 9, this control may be omitted.

In the above embodiment, the controller 50 performs switching between the presence and absence of injection in accordance with whether the outside air temperature detected by the outside air temperature sensor 44 is equal to or lower than the predetermined temperature Tth in steps S1 and S2 of FIG. 8. As another embodiment, switching between the presence and absence of injection may be performed in accordance with the outside air temperature detected by the outside air temperature sensor 44, the temperature of the heating medium near the inlet of the use side heat exchanger 12 (water inflow temperature) detected by the pre-heating temperature sensor 43, and the state of the refrigeration cycle.

It is only required that the controller in the present invention be one that can control the apparatus in the present invention. In describing the subject matter of the invention, one that controls the apparatus of the present invention may be described as control means or a control unit, or described with similar wording, in addition to the controller. The controller can be implemented in various modes. For example, a processor may be used as the controller. Using the processor as the controller makes it possible to execute various processes by the processor reading a program from a storage medium in which the program is stored and executing the program. Thus, processing details can be changed by changing the program stored in the storage medium, and flexibility of changing control details can thus be increased. Examples of the processor include a central processing unit (CPU) and a micro-processing unit (MPU). Examples of the storage medium include a hard disk, a flash memory, and an optical disk. Wired logic that cannot be reprogrammed may be used as the controller. Using the wired logic as the controller is effective in improving the processing speed. An application specific integrated circuit (ASIC) is an example of the wired logic. The controller may be implemented by a combination of the processor and the wired logic. Implementing the controller by the combination of the processor and the wired logic makes it possible to improve the processing speed while increasing the flexibility of software design. The controller and a circuit having a function different from the function of the controller may be configured as a single semiconductor device. An A/D or D/A conversion circuit is an example of the circuit having the different function. The controller may be configured as a single semiconductor device or may include multiple semiconductor devices. When the controller includes multiple semiconductor devices, the control operations described in the claims may be achieved by semiconductor devices different from each other. Furthermore, the controller may have a configuration including a semiconductor device, and a passive component such as a resistor or a capacitor.

Since the embodiments described above are intended to exemplify the technique in the present invention, various changes, replacements, additions, omissions, and the like can be made within the scope of the claims.

### Industrial Applicability

The present invention is applicable to a use to control fluctuations in the heating capacity of a use side heat exchanger resulting from changes in the injection flow rate in a refrigeration cycle apparatus that performs injection of a refrigerant into a compressor.

### Reference Signs List

- 1: refrigeration cycle apparatus
- 10: main refrigerant circuit
- 11: compressor
- 12: use side heat exchanger
- 13: intermediate heat exchanger
- 14: first expansion valve
- 15: heat source side heat exchanger
- 16: refrigerant pipe
- 17: four-way valve
- 20: bypass refrigerant circuit
- 21: second expansion valve
- 30: use side heating medium circuit
- 31: feed pump
- 32: heating medium pipe
- 41: discharge pressure sensor
- 43: pre-heating temperature sensor
- 44: outside air temperature sensor
- 50: controller
- 51: processor
- 52: memory
- 53: program
- 54: control data
- 60: remote control

## Claims

1. A refrigeration cycle apparatus (1) comprising:
a main refrigerant circuit (10) through which a refrigerant circulates, the main refrigerant circuit (10) including a compressor (11) having an injection port (11a) communicating with a compression chamber, a use side heat exchanger (12), an intermediate heat exchanger (13), a first expansion valve (14), and a heat source side heat exchanger (15) connected in order;
a bypass refrigerant circuit (20) branching off from the main refrigerant circuit (10) between the use side heat exchanger (12) and the first expansion valve (14), the bypass refrigerant circuit (20) communicating with the injection port (11a) of the compressor (11), the bypass refrigerant circuit (20) including a second expansion valve (21) and the intermediate heat exchanger (13) connected in order from the main refrigerant circuit side (10);
an outside air temperature sensor (44) that detects the outside air temperature and a controller (50) configured to control an operating frequency of the compressor (11) and an open-close state of the second expansion valve (21),
**characterized in that**
the controller (50) includes a processor (51) and a memory (52),
control data (54) for determining control conditions for the compressor (11) and the first expansion valve (14) are stored in the memory (52),
wherein the controller (50):
executes control to bring the second expansion valve (21) into an open state to perform injection when an outside air temperature detected by an outside air temperature sensor (44) is equal to or lower than a predetermined temperature and to bring the second expansion valve (21) into a closed state to not perform injection when the outside air temperature is higher than the predetermined temperature, and
controls the operating frequency of the compressor (11) so as to offset an increase or reduction in a heating capacity of the use side heat exchanger (12) resulting from switching the second expansion valve (21) between the open state and the closed state and so that a temperature of a heating medium flowing out of the use side heat exchanger (12) into a use side heating medium circuit (30) becomes a set temperature, using a control map included in the control data (54).

2. The refrigeration cycle apparatus (1) according to claim 1, wherein the controller (50) executes control to reduce the operating frequency of the compressor (11) when switching the second expansion valve (21) from the closed state to the open state.

3. The refrigeration cycle apparatus (1) according to claim 2, wherein the controller (50) reduces an opening degree of the first expansion valve (14) when switching the second expansion valve (21) from the closed state to the open state.

## Patentansprüche

1. Kühlkreislaufvorrichtung (1), umfassend:
einen Hauptkältemittelkreislauf (10), durch den ein Kältemittel zirkuliert, wobei der Hauptkältemittelkreislauf (10) einen Kompressor (11) mit einem Injektionsanschluss (11a), der mit einer Kompressionskammer in Verbindung steht, einen nutzungsseitigen Wärmetauscher (12), einen Zwischenwärmetauscher (13), ein erstes Expansionsventil (14), und einen wärmequellenseitigen Wärmetauscher (15) umfasst, die in dieser Reihenfolge miteinander verbunden sind;
ein Nebenstromkältemittelkreislauf (20), der zwischen dem nutzungsseitigen Wärmeaustauscher (12) und dem ersten Expansionsventil (14) vom Hauptkältemittelkreislauf (10) abzweigt, wobei der Nebenstromkältemittelkreislauf (20) mit dem Injektionsanschluss (11a) des Kompressors (11) in Verbindung steht, wobei der Nebenstromkältemittelkreislauf (20) ein zweites Expansionsventil (21) und den Zwischenwärmetauscher (13) umfasst, die in dieser Reihenfolge von der Seite des Hauptkältemittelkreislaufs (10) aus angeschlossen sind;
einen Außenlufttemperatursensor (44), der die Außenlufttemperatur erfasst, und eine Steuereinrichtung (50), die dazu konfiguriert ist, eine Betriebsfrequenz des Kompressors (11) sowie einen Öffnungs- und Schließzustand des zweiten Expansionsventils (21) zu steuern,
**dadurch gekennzeichnet, dass**
die Steuereinrichtung (50) einen Prozessor (51) und einen Speicher (52) umfasst,
Steuerdaten (54) zum Bestimmen der Steuerbedingungen für den Kompressor (11) und das erste Expansionsventil (14) im Speicher (52) gespeichert sind,
wobei die Steuereinrichtung (50):
eine Steuerung durchführt, um das zweite Expansionsventil (21) in einen offenen Zustand zu versetzen und eine Einspritzung durchzuführen, wenn eine von einem Außenlufttemperatursensor (44) erfasste Außenlufttemperatur gleich oder niedriger als eine vorbestimmte Temperatur ist, und um das zweite Expansionsventil (21) in einen geschlossenen Zustand zu versetzen und keine Einspritzung durchzuführen, wenn die Außenlufttemperatur höher als die vorbestimmte Temperatur ist, und
die Betriebsfrequenz des Kompressors (11) so steuert, dass ein Anstieg oder eine Abnahme einer Heizleistung des nutzungsseitigen Wärmetauschers (12) aufgrund des Umschaltens des zweiten Expansionsventils (21) zwischen dem geöffneten und dem geschlossenen Zustand ausgeglichen wird, und so, dass eine Temperatur eines Wärmemediums, das aus dem nutzungsseitigen Wärmetauscher (12) in einen nutzungsseitigen Wärmemediumkreislauf (30) strömt, eine Solltemperatur erreicht, wobei ein in den Steuerdaten enthaltenes Steuerkennfeld verwendet wird (54).

2. Kühlkreislaufvorrichtung (1) nach Anspruch 1, wobei die Steuereinrichtung (50) eine Steuerung ausführt, um die Betriebsfrequenz des Kompressors (11) zu reduzieren, wenn das zweite Expansionsventil (21) vom geschlossenen in den offenen Zustand umgeschaltet wird.

3. Kühlkreislaufvorrichtung (1) nach Anspruch 2, wobei die Steuereinrichtung (50) den Öffnungsgrad des ersten Expansionsventils (14) reduziert, wenn das zweite Expansionsventil (21) vom geschlossenen in den offenen Zustand umgeschaltet wird.

## Revendications

1. Appareil à cycle de réfrigération (1) comprenant :
un circuit de fluide frigorigène principal (10) à travers lequel circule un fluide frigorigène, le circuit de fluide frigorigène principal (10) comportant un compresseur (11) présentant un orifice d'injection (11a)communiquant avec une chambre de compression, un échangeur de chaleur côté utilisation (12), un échangeur de chaleur intermédiaire (13), un premier détendeur (14) et un échangeur de chaleur côté source de chaleur (15), reliés dans l'ordre ;
un circuit de fluide frigorigène de dérivation (20) se ramifiant à partir du circuit de fluide frigorigène principal (10) entre l'échangeur de chaleur côté utilisation (12) et le premier détendeur (14), le circuit de fluide frigorigène de dérivation (20) communiquant avec l'orifice d'injection (11a) du compresseur (11), le circuit de fluide frigorigène de dérivation (20) comportant un second détendeur (21) et l'échangeur de chaleur intermédiaire (13), reliés dans l'ordre à partir du côté du circuit de fluide frigorigène principal (10) ;
un capteur de température (44) d'air extérieur qui détecte la température de l'air extérieur et un dispositif de commande (50) configuré pour commander une fréquence de fonctionnement du compresseur (11) et un état d'ouverturefermeture du second détendeur (21),
**caractérisé en ce que**
le dispositif de commande (50) comporte un processeur (51) et une mémoire (52),
des données de commande (54) destinées à déterminer des conditions de commande pour le compresseur (11) et le premier détendeur (14) sont stockées dans la mémoire (52),
le dispositif de commande (50) :
exécutant une commande afin d'amener le second détendeur (21) dans un état ouvert en vue d'effectuer une injection lorsqu'une température d'air extérieur détectée par un capteur de température (44) d'air extérieur est égale ou inférieure à une température prédéterminée et afin d'amener le second détendeur (21) dans un état fermé en vue de ne pas effectuer d'injection lorsque la température d'air extérieur est supérieure à la température prédéterminée et
commandant la fréquence de fonctionnement du compresseur (11) de manière à compenser une augmentation ou une réduction d'une capacité de chauffage de l'échangeur de chaleur côté utilisation (12) résultant de la commutation du second détendeur (21) entre l'état ouvert et l'état fermé et de telle sorte qu'une température d'un milieu chauffant s'écoulant hors de l'échangeur de chaleur côté utilisation (12) dans un circuit de milieu chauffant côté utilisation (30) devient une température définie, à l'aide d'une carte de commande incluse dans les données de commande (54).

2. Appareil à cycle de réfrigération (1) selon la revendication 1, le dispositif de commande (50) exécutant une commande afin de réduire la fréquence de fonctionnement du compresseur (11) lors de la commutation du second détendeur (21) de l'état fermé à l'état ouvert.

3. Appareil à cycle de réfrigération (1) selon la revendication 2, le dispositif de commande (50) réduisant un degré d'ouverture du premier détendeur (14) lors de la commutation du second détendeur (21) de l'état fermé à l'état ouvert.
